# FASCICULE DE BREVET EUROPEEN

(11) **EP 0 917 686 B1**
(45) Date de publication et mention de la délivrance du brevet: **13.11.2002**
(21) Numéro de dépôt: 96946393.4
(22) Date de dépôt: 05.08.1996
(51) Int. Cl.: G06K 19/077

(54) **PROCEDE DE REALISATION DE CARTES A MEMOIRE**
HERSTELLUNGSVERFAHREN FÜR SPEICHERKARTEN
METHOD FOR MAKING SMART CARDS

(43) Date de publication de la demande: 26.05.1999
(73) Titulaire: GEMPLUS, 13881 Gémenos Cédex (FR)
(72) Inventeur: PERMINGEAT, Vincent, F-13011 Marseille (FR)
(86) Numéro de dépôt international: FR9601245
(87) Numéro de publication internationale: WO98006061

(56) Documents cités:
- EP-A- 0 585 949
- EP-A- 0 623 897
- FR-A- 2 613 510
- ELECTRONIQUE RADIO PLANS, no. 535, Juin 1992, PARIS (FRANCE), pages 50-52, XP000304716 GUEULLE,PATRICK.: "LA FABRICATION DES CARTES PUCES CHEZ GEMPLUS"

## Description

L'invention concerne un procédé de réalisation de cartes à mémoire, du type constitué d'un corps de carte et d'un module électronique, et des cartes obtenues par la mise en oeuvre du procédé.

Parmi les procédés existants, on connaît un procédé qui consiste à fournir un corps de carte comportant une cavité, un module électronique comportant principalement des plages de contact et une pastille semi-conductrice contenant un circuit intégré, et à fixer le module électronique dans ladite cavité à l'aide de moyens de collage tels qu'une colle cyanocrylate. En général, l'opération de collage comprend une opération préalable de dépose de la colle, une opération d'insertion du module dans la cavité et une opération de pressage pendant un temps prédéterminé.

Toutefois, la mise en oeuvre pratique d'un tel procédé, communément appelé encartage, à une échelle industrielle automatisée nécessitant des opérations distinctes cadencées effectuées à différents postes ainsi que des transferts de cartes d'un poste à l'autre à un rythme élevé, de l'ordre de quelques milliers de cartes à l'heure, est source de divers problèmes qui influent sur la qualité du produit final.

En particulier, il a été constaté que les cartes obtenues par collage en suivant les opérations exposées ci-dessus présentaient souvent des défauts majeurs.

Parmi ces défauts, on trouve principalement des défauts de centrage du module dans la cavité. En effet, malgré une insertion correctement centrée du module dans la cavité, il a été constaté que des modules étaient décentrés en fin de collage, c'est à dire qu'il se retrouvaient décalés par rapport à la position initiale d'insertion. Les décalages types constatés se traduisent soit par une légère rotation, soit par une translation, soit les deux à la fois à l'intérieur de la cavité, soit dans des cas extrêmes en dehors de la cavité avec un chevauchement d'un bord des plages de contact sur la surface du corps de carte.

Citons les documents US-A-4196271 US-A-4803124 et "La fabrication des cartes à puce chez Gemplus", 2429, Electronique Radio Plans (1992) juin, N°535, pp 50-52, Paris FR.

Le document US4196271 enseigne des valeurs minimales de température et humidité.

Le document US-A-4803124 décrit la fixation d'une puce à une surface de montage en utilisant une buse de dépôt d'un adhésif permettant un motif en étoile de mer.

Le document "La fabrication des cartes à puce chez Gemplus", 2429, Électronique Radio Plans (1992) juin, N°535, pp 50-52, Paris FR propose de déposer des gouttes de colles de poids égal et sans motif particulier. Il décrit un dépôt simultané de ces gouttes de coller (voir le préambule de la revendication 1).

Il a été trouvé que le décentrage résulte notamment de forces engendrées sur la carte au cours de son déplacement d'un poste à un autre, notamment des forces brutales d'accélération ou de décélération engendrées respectivement par le départ du poste d'insertion et l'arrêt de la carte au poste de pressage.

Le décentrage peut également résulter de contraintes résiduelles présentes dans le module qui tendent à lui donner une légère incurvation vers le haut. Dans ce cas, le module risque de sortir de la cavité à chaque accélération ou décélération ci-dessus.

On trouve également des défauts relatifs à une mauvaise adhérence du module sur le corps de carte. Dans de telles situations, la carte ne peut satisfaire à des critères de résistance mécanique en flexion /torsion ou à l'arrachement imposés par les normes en vigueur (ISO, AFNOR).

Il est donc nécessaire de résoudre ces problèmes sans diminuer les cadences de production.

L'invention a pour objectif de proposer un procédé de collage de module électronique dans le corps de carte qui puisse être compatible avec une production industrielle automatisée et cadencée à un rythme très élevé, sans pour autant engendrer des défauts, soit de centrage du module, soit d'adhérence.

A cet effet, la présente invention a pour objet un procédé selon la revendication 1.

Le procédé définit sur le plan des conditions ambiantes susceptibles d'être compatibles avec une mise en oeuvre industrielle cadencée à un rythme élevé. On évite notamment des défauts de mauvaise adhérence de la colle et des risques d'encrassage des moyens de dispense, et des risques d'électricité statique expliqués ultérieurement.

La quantité de colle permet de répondre, à l'exigence d'avoir une surface d'adhérence suffisante pour satisfaire aux critères de résistance mécaniques visés précédemment, et à l'exigence de maintenir suffisamment le module à l'encontre de forces tendant à le décentrer pendant son transfert ou jusqu'à ce que la colle soit pressée.

On peut améliorer la qualité de collage tout en assurant un niveau satisfaisant de maintien du module lorsque la surface ci-dessus est égale à environ 70 %, la température à environ 20°C et le taux hygrométrique égal à environ 55%. Dans ces conditions, la colle retenue possède un temps d'ouverture égal à environ 60 secondes.

Selon une caractéristique préférée on mouille la surface inférieure du module avec de l'alcool préalablement à son insertion dans la cavité pour créer artificiellement des points d'accrochage de la colle cyanocrylate au module, ce qui permet à la colle de mieux maintenir le module en position centrée pendant son transfert d'un poste à un autre à cadence élevée.

Selon une autre caractéristique préférée, l'insertion du module s'effectue en un laps de temps compris entre 300 et 600 m.s.

Ce laps de temps permet à la colle de créer encore plus de points d'accrochage à la surface inférieure du module qui vont mieux le maintenir en position centrée pendant son transfert. En opérant de cette manière, le procédé de l'invention permet un dépôt de la colle à des cadences très élevées parfaitement contrôlées.

Selon une autre caractéristique on dépose la colle sous forme d'au moins cinq points de colle, un point central constitué par une goutte centrale plus grande, et quatre points latéraux, constitués des gouttes de poids plus faibles pour assurer un bon maintien du module pendant son transfert. En outre, il s'est avéré plus rapide de déposer sous cette forme plutôt qu'une autre forme, par exemple un cordon de la même quantité.

Une meilleure qualité de collage est obtenue lorsque l'on dépose les quatre points de colle latéraux après le dépôt du point central.

Selon une autre caractéristique, preférée un pressage final à l'aide de moyens presseurs exerce une pression uniquement sur la périphérie des plages de contact.

Grâce à cette disposition, on peut exercer la pression nécessaire à l'obtention d'une épaisseur de colle donnée et créer une adhérence du module de bonne qualité sans risquer d'introduire des contraintes de pression au niveau de la pastille semi-conductrice, qui pourraient l'endommager.

D'autres caractéristiques et avantages de l'invention apparaîtront plus clairement à la lecture de la description qui va suivre de dessins annexés sur lesquels :
- la figure 1 représente un corps de carte utilisable dans le procédé de l'invention;
- la figure 2 représente en coupe un module électronique utilisable dans le procédé de l'invention;
- la figure 3 représente une vue de dessus d'un film support de modules électroniques;
- la figure 4 représente une vue schématique montrant l'agencement du module par rapport à la carte.
- la figure 5 représente un schéma d'une cavité vue de dessus avec un tracé pour le dépôt des points de colle;
- la figure 6 représente les surfaces d'adhérence des moyens de collage sur la cavité après pressage;
- les figures 7 à 11 représentent les différentes étapes du procédé, ou différents postes opératoires d'une installation;
- la figure 12 représente des moyens de pressage;
- la figures 13 représente une vue de dessus d'un exemple d'installation pour la mise en oeuvre du procédé à cadence très élevée.
- la figure 14 représente les moyens de mouillage à l'alcool.

Le procédé de réalisation de cartes à mémoire nécessite de fournir un corps de carte muni d'une cavité et un module électronique de dimensions correspondant à ladite cavité.

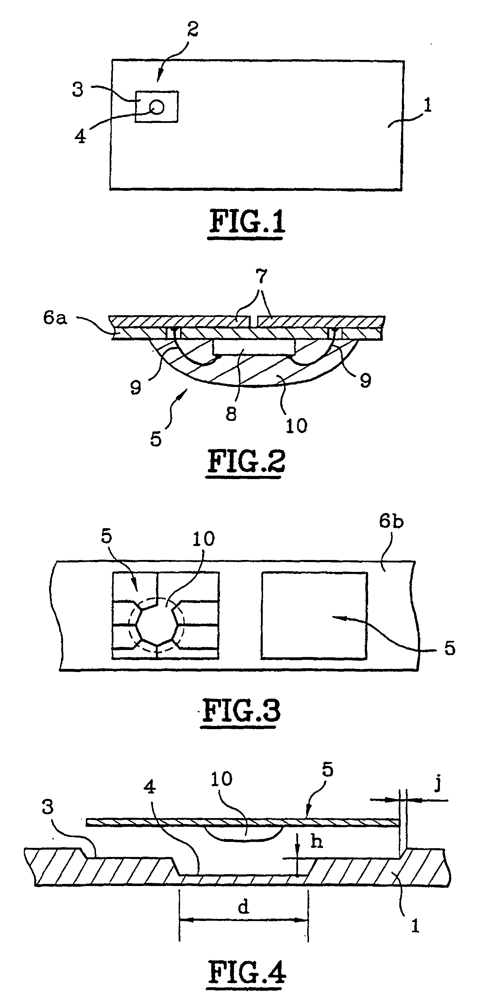

La figure 1 représente un exemple de corps de carte 1 utilisable par le procédé. Il comprend une cavité 2 qui peut être obtenue par moulage en même temps que le corps de carte ou par usinage.

Les corps de carte de ce type sont normalisées par les nonnes ISO ou AFNOR, et possèdent par conséquent des dimensions prédéterminées.

La cavité doit permettre de recevoir le module. Elle peut donc avoir des formes variées selon le module retenu. Elle est constituée dans cet exemple de deux évidements, un premier évidement 3 de forme générale rectangulaire débouchant à la surface avant de la carte, et un deuxième évidement 4 de forme générale circulaire plus profond que le premier disposé au centre du rectangle et débouchant dans le fond du premier. Le deuxième évidement a un diamètre d de 8,2 mm et une hauteur h de 0,6 mm (figure 4).

La matière utilisée, généralement le plastique, dépend des applications. Ainsi par exemple, les cartes à mémoire téléphoniques sont en ABS (acrylonitrile butadiène styrène), elles peuvent être aussi en PVC (chlorure de polyvinyle), ou sous forme feuilletée avec du polycarbonate (PC) par exemple en PC/ABS, ou en PCIPVC.

Dans l'exemple, on a utilisé une cavité conforme à la norme ISO et de l'ABS pour la matière du corps de carte.

Le module électronique 5 (figure 2 et 3) comporte généralement un film support 6a en matière synthétique isolante, des plages de contact 7 en matériau conducteur, une pastille de silicium 8 contenant un circuit intégré, des fils de liaison 9 de la pastille aux plages de contact et une résine d'enrobage 10 recouvrant la pastille et les fils de liaison.

L'enrobage, généralement en résine époxy thermodurcissable, forme un bossage qui peut avoir des dimensions irrégulières notamment en épaisseur. Dans le meilleur des cas, ce bossage peut être arasé par fraisage selon une côte plus précise de manière à faciliter l'opération de collage du module dans le corps de carte. De préférence, l'invention vise à utiliser directement le bossage sans qu'il ait été fraisé.

Le module (figures 2 et 3) peut être de plusieurs types, par exemple du type dit «LFCC» (Lead Frame Contre Collé) avec un film support en polyimide, ou d'un type comportant un film support en époxy.

Dans l'exemple, le module est du type LFCC et présente donc une surface inférieure en polyimide. Il est fourni à partir d'un film continu 6b (figure 3) et présenté sur bobine.

La cavité de la carte est destinée à recevoir le module comme illustré schématiquement à la figure 4. Pour cela, l'évidement 4 correspond au bossage 10, tandis que l'évidement 3 correspond aux plages de contact 5 avec un jeu nécessaire d'assemblage (J). Ce jeu est tel qu'une simple rotation du module dans le plan de la carte ou une simple translation dans ce même plan, est notable à l'oeil nu et constitue de ce fait un défaut de centrage.

Selon l'invention, le procédé consiste également à fournir une colle cyanocrylate.

Elle peut être de nature différente selon notamment la quantité d'accélérateur qu'elle comporte. De préférence, pour assurer un bon collage la colle doit être aussi pure que possible et polymériser le plus lentement possible. Par contre, il a été trouvé que la colle ne doit pas polymériser trop ientement dans les conditions opératoires utilisées si on souhaite accrocher le module et le maintenir en position centrée.

II a été constaté que si la quantité était trop importante, il y avait des risques de débordement. En outre, la colle ne maintenait pas suffisamment le module en place pour son transfert.

En conséquence, aussi bien le type de colle cyanocrylate que la quantité et les conditions ambiantes opératoires ont été déterminés pour maintenir le module en place dans une production industrielle à cadence élevée.

Un bon compromis entre la capacité de la colle à maintenir le module en place et à résister aux efforts d'arrachement et de flexion/torsion a été obtenu avec une colle qui présenté un temps d'ouverture compris entre des valeurs égales à environ 30 et 60 secondes dans les conditions ambiantes et les quantités correspondant aux intervalles de valeurs les plus larges de l'exemple. Par définition, le temps d'ouverture d'une colle c'est le temps pendant lequel la colle peut encore adhérer. Un compromis optimal pour toutes ces valeurs a été trouvé avec une colle qui possède un temps d'ouverture égal à environ 30 secondes. Une telle colle cyanocrylate est disponible sous la marque « Henkel » et sous la référence 8400.

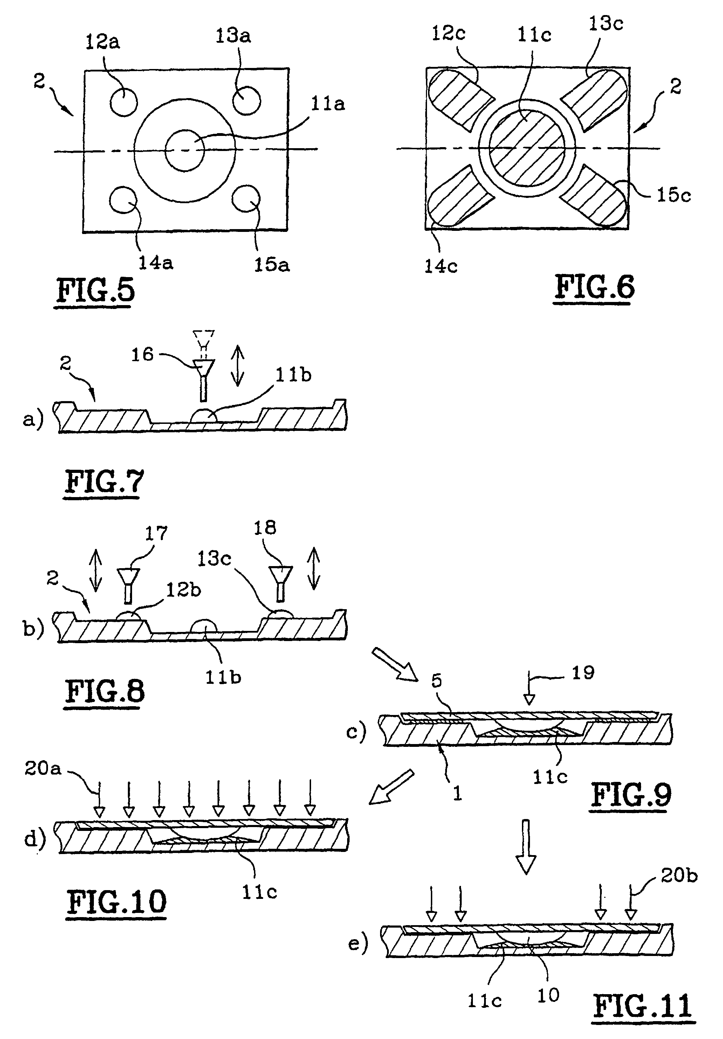

Selon l'invention, le procédé comporte des étapes selon lesquelles, la colle cyanocrylate est déposée dans la cavité, on insère le module dans la cavité dans une position sensiblement centrée et on maintient une pression tendant à rapprocher ledit module contre ladite carte pour presser la colle. Ces étapes seront décrites ultérieurement en détail dans un exemple de mise en oeuvre illustré aux figures 7 à 11.

Conformément au procédé de l'invention, la colle cyanocrylate est déposée en une quantité permettant de couvrir une surface de collage comprise entre 50 et 100 % de la surface plane de ladite cavité après pressage et sous une température comprise entre 15 et 30°C et un taux hygrométrique compris entre 50 et 75%.

De meilleurs résultats ont été obtenus lorsqu'on utilise une surface de collage comprise entre 60 et 80 %, une-température comprise entre 18 et 24°C et un taux hygrométrique compris entre 50 et 75%.

A la figure 6, on voit une cavité comportant les empreintes laissée par la colle après pressage. L'étalement de la colle s'effectue de manière que l'empreinte laissée par chaque point de colle latéral définit une surface semi-circulaire 12c à 14c ayant une forme générale en U qui s'étend sensiblement radialement depuis la proximité du bord du deuxième évidement 4 jusqu'à la proximité de l'angle délimité par le rectangle formé par le premier évidement, la base du U étant orienté vers l'angle. L'empreinte laissée par le point central est quant à elle une surface circulaire 11c.

Ainsi, avec des surfaces de collage telles que définies par ces formes d'empreintes et avec les proportions ci-dessus, on obtient une adhérence suffisante du module pour résister aux efforts imposés par les normes visées précédemment.

Dans l'exemple, on a utilisé des valeurs pour un maintien satisfaisant du module et une qualité de collage optimale : la colle a été déposée en une quantité qui a couvert 70 % de la surface de la cavité c'est à dire du rectangle de la figure 6, sous une température de 20 °C et une hygrométrie de 55 %. Le pressage est effectué de manière à avoir une épaisseur de colle la plus fine. De bons résultats ont été obtenus avec une épaisseur après pressage comprise entre 0,01 et 0,03 mm. Dans l'exemple on a obtenu une épaisseur de 0,02 mm. Pour ces valeurs précises, le temps d'ouverture de la colle est alors situé parmi les valeurs supérieures de l'intervalle 30 à 60 secondes, 60 secondes environ étant optimal.

A l'inverse, on peut obtenir un maintien optimal du module et une qualité de collage satisfaisante en choisissant une colle cyanocrylate qui possède un temps d'ouverture situé parmi les valeurs inférieures de l'intervalle 30 à 60 secondes, par exemple 30 secondes, les valeurs ci-dessus des autres paramètres étant conservées.

En ce qui concerne la détermination des conditions ambiantes ci-dessus, il a été constaté qu'une température et une hygrométrie trop faibles conduisaient à une polymérisation trop lente de la colle et par conséquent entraînaient des risques de décollage et de décentrage du module (avec des risques de pollution de surface par polymérisation de la colle: « blooming »). A l'inverse, il a été constaté qu'une température et une hygrométrie trop élevées conduisaient à une polymérisation trop rapide de la colle, ce qui entraînaient d'une part également des risques de décollage, et avait d'autre part l'inconvénient de salir et de boucher une aiguille utilisée dans les moyens de dispense de colie. En outre, il a également été constaté qu'une hygrométrie trop faible entraînait des risques d'électricité statique. L'électricité statique a l'inconvénient d'attirer fortement des gouttes de colle cyanocrylate qui peuvent se déposer au hasard et générer des défauts.

Selon une caractéristique préférée du procédé de l'invention, la colle est déposée sous forme d'au moins cinq points de colle, au moins un point central constitué par une goutte de poids compris entre 0,002 et 0,004 gramme et au moins quatre points latéraux, chaque point latéral étant constitué d'une goutte de colle de poids compris entre 0,0005 et 0,0015 gramme. Ces valeurs permettent un bon maintien du module jusqu'à l'étape de pressage.

Dans l'exemple, on a obtenu un maintien optimal avec uniquement cinq points et une quantité correspondant sensiblement à un poids de 0,003 gramme pour le point central, et à environ 0,001 gramme pour chaque point latéral.

La dépose sous forme de point est préférée par rapport à une dépose sous forme de cordon pour une plus grande facilité de mise en oeuvre à échelle industrielle à cadence élevée. Le nombre de cinq ainsi qu'un tracé particulier et préféré pour des points de colle permettent d'assurer une bonne adhérence du module. Un nombre de points égal à cinq est également plus commode et rapide à mettre en oeuvre compte tenu de la quantité totale de colle à dispenser.

Un exemple de tracé optimal est illustré à la figure 5. Il comporte un point 11a dit central dans le logement de la pastille, et quatre autres points 12a à 15a dits latéraux situés dans le logement des plages de contact et dans les angles du rectangle représentant schématiquement la cavité. D'autres tracés de point de colle sont également possibles.

On va maintenant décrire les étapes du procédé en référence à un exemple de mise en oeuvre tel qu'illustré aux figures 7 à 11.

Dans l'exemple, les figures 7 à 11 peuvent représenter aussi bien des étapes du procédé que des postes opératoires successifs d'une installation telle que décrite infra.

A un premier poste (figure 7) et selon une première étape a), on dépose d'abord une goutte de colle 11b au centre de la cavité à l'aide de moyens de dispense 16, puis on transfère la carte au poste suivant (figure 8).

A ce poste et selon une deuxième étape b), on dépose quatre gouttes de colle cyanocrylate 12b à 14b dites latérales dans les quatre angles de l'évidement supérieur à l'aide d'autres moyens de dispense 17 et 18, et la carte est transférée à un poste dit d'insertion (figure 9).

Au poste d'insertion, selon une autre étape du procédé c), on vient insérer un module électronique 5, à l'aide de moyens d'insertion 19 et en exerçant une légère pression dite d'insertion. Le temps d'insertion est dans cet exemple à égal à 300 ms.

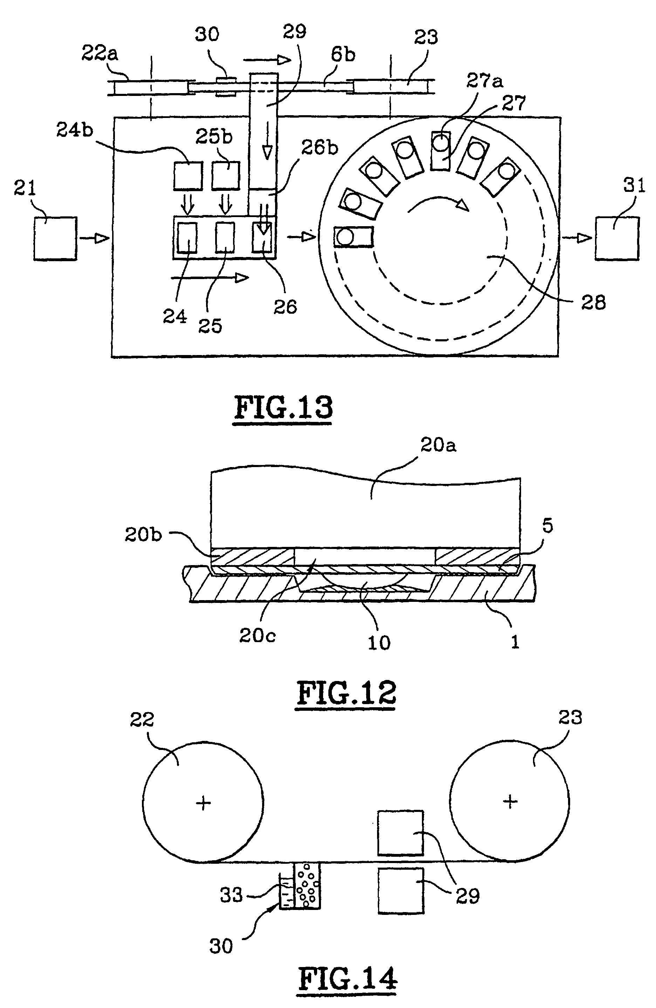

On obtient un meilleur maintien avec un temps d'insertion supérieur par exemple égal à 500 ms. Puis, la carte est transférée au poste de pressage (figure 10) ou (selon une alternative préférée : figure 11).

Au poste de pressage (figure 10), selon une autre étape du procédé d), on vient presser les moyens de collage en appliquant une force égale à environ 34 daN pendant une durée de 22 secondes à l'aide de moyens presseurs agissant sur toute la surface du module.

Selon l'alternative préférée (figure 11) et une autre caractéristique du procédé, on effectue le pressage uniquement sur la périphérie des plages de contact, ce qui a pour avantage de presser convenablement la colle sans risquer d'introduire des contraintes mécaniques qui pourraient endommager la pastille semi-conductrice ou des fils de raccordements. Des moyens presseurs utilisables sont décrits infra à la figure 12.

Comme déjà expliqué précédemment, le bossage d'enrobage 10 peut en effet avoir des épaisseurs légèrement variables. Or dans des cas extrêmes, le bossage peut venir en butée contre le fond de la cavité et créer de ce fait un point central du module légèrement plus élevé que les plages de contact qui, elles, affleurent la surface du corps de carte. De telles configurations fréquemment rencontrées dans une fabrication industrielle interdisent d'appliquer la pression nécessaire à un collage de bonne qualité.

Dans l'exemple, une force de 34 daN a été répartie uniquement sur la zone périphérique des plages de contact qui prend appui sur le premier évidement.

A l'étape suivante, la carte est évacuée, ce qui termine l'opération d'encartage.

Selon une autre mode de réalisation du procédé, celui-ci comprend une étape dans laquelle on traite la surface du module de manière à activer la polymérisation de la colle lorsque celle-ci vient au contact du module.

D'autres traitements connus de l'homme du métier peuvent être également utilisés.

Par commodité et en raison d'un bon accrochage immédiat de la colle au module, on mouille la surface inférieure du module avec de l'alcool préalablement à son insertion dans ladite cavité. De l'alcool éthylénique à 95 % a permis d'obtenir de bons résultats d'activation.

Cette opération permet d'activer immédiatement et localement la polymérisation de la colle au contact du polyimide passé à l'alcool, et de créer artificiellement des points d'accrochage qui vont permettre de maintenir le module encore plus en position au cours de son transfert.

Pour être sûr d'avoir suffisamment de points d'accrochage et maintenir correctement le module, on agit avantageusement sur le temps d'insertion du module comme expliqué supra. Le temps d'insertion est volontairement limité à 600 ms comme valeur maximale dé manière à conserver la compatibilité industrielle à cadence élevée.

Le mouillage à l'alcool permet également de rétablir artificiellement la différence d'humidité de surface entre une surface de carte en ABS et celle du film du module en polyimide qui aurait conduit à une différence d'adhérence. En effet, l'ABS a un comportement hydrophile différent du polyimide. L'ABS stocke des molécules d'eau en surface, tandis que le polyimide les stocke à l'intérieur. L'eau étant un paramètre influant l'activation de la colle, il est préférable d'activer la polymérisation sur la surface du film de manière à avoir à terme un niveau d'adhérence de la colle aussi bon sur le modulé que sur la carte.

On va maintenant décrire un exemple d'installation pour une mise en oeuvre industrielle à cadence élevée du procédé selon l'invention en référence à la figure 13.

L'installation comporte des moyens 21 d'approvisionnement en cartes pour fournir une pluralité de corps de cartes, des moyens d'approvisionnement en modules 22, 23 pour fournir une pluralité de modules, un premier poste 24 de dispense d'une goutte de colle équipé de moyens 24b de dispense comportant une aiguille 16, un deuxième poste 25 de dispense de quatre gouttes de colle équipé de moyens de dispense 25b comportant deux aiguilles 17 et 18, un poste 26 d'insertion du module équipé de moyens d'insertion 26b, des postes de pressage 27 équipés de moyens presseurs disposés en périphérie d'un carrousel 28 où les cartes peuvent séjourner le temps du pressage, des moyens 29 de découpe et de transfert des modules vers le poste d'insertion, des moyens 30 de mouillage à l'alcool le cas échéant, puis des moyens d'évacuation 31. L'installation comprend également une enceinte à atmosphère contrôlée en température et hygrométrie (non représentée).

Les moyens d'approvisionnement de modules sont constitués par deux bobines, une première bobine 22 chargée d'un film 6b portant les modules et une seconde bobine 23 portant un film dépourvu de modules, l'une se déroulant pendant que l'autre s'enroule. Le film passe successivement par les moyens 30 de mouillage à l'alcool décrits ci-après et par les moyens de découpe du module 29.

Les modules sont extraits de ce film par les moyens de découpe et conduits à l'aide des moyens de transfert vers le poste d'insertion où ils sont insérés de manière centrée dans la cavité de chaque carte.

Les moyens 30 de mouillage à l'alcool de la surface inférieure du module sont constitués dans cet exemple, par une éponge 30 plongeant dans un bain 33 d'alcool éthylique contenu dans un récipient. L'éponge est maintenue en permanence au contact du film d'alimentation en module.

Les aiguilles des moyens de dispense de la colle sont mobiles verticalement et transversalement.

Chaque poste de pressage 27 est muni de moyens presseurs 27a, comportant une extrémité 20a (figure 12) qui vient en contact du module. Afin de mettre en oeuvre le pressage conformément au procédé, cette extrémité est munie d'un blanchet 20b troué au centre permettant d'exercer la pression uniquement en périphérie du module. Le blanchet est en une matière apte à répartir la pression sans altérer les plages de contact par exemple un élastomère et possède une forme rectangulaire correspondant à la forme du module.

### Fonctionnement.

Lorsqu'une carte arrive en position à chaque poste de dispense, les aiguilles se positionnent au dessus de l'endroit des points de colle correspondant au tracé prévu (figure 5), descendent à proximité de la surface de la cavité et un système de contrôle (non représenté) commande la délivrance des quantités de colle prédéterminées; ensuite, les aiguilles remontent de manière à rompre un fil de colle résiduel qui a tendance à s'accrocher à l'aiguille et se remettent en position d'attente de la carte suivante. Elles sont réglées de manière à permettre une descente, dispense, et remontée en 1,5 secondes.

Ensuite, les cartes sont transférées au poste d'insertion où elles reçoivent un module, le temps d'insertion étant de 500 ms.

Ensuite, les cartes sont transférées au poste de pressage où le module est pressé contre le corps de carte, la force appliquée étant de 34 daN. Elles séjournent 22 secondes sur le carrousel, puis elles sont éjectées au poste suivant.

A la sortie du carrousel, les cartes sont éventuellement testées et évacuées vers les moyens d'évacuation 31.

Des moyens de déplacement des cartes d'un poste à l'autre sont mécanisés de manière à permettre une cadence égale à au moins 1500 cartes à l'heure.

## Revendications

1. Procédé de réalisation de cartes à module électronique consistant à fournir un corps de carte muni d'une cavité, un module électronique de dimensions correspondant à la cavité, une colle cyanoacrylate, et comportant des étapes selon lesquelles on dépose cette colle dans la cavité, on insère dans cette cavité le module dans une position sensiblement centrée et on presse la colle entre le corps de carte et le module ; la colle étant déposée en gouttes à des point central et au moins quatre points latéraux ; **caractérisé en ce que** :
□ une quantité de colle déposée permet seulement un encollage d'une aire d'au moins 50 % de la cavité après pressage ;
□ le dépôt de la colle étant effectué sous des conditions ambiantes à une température de 15° à 30° C et une humidité relative de 50 à 75 % ; et
□ la goutte au point central est plus grand que les gouttes aux points latéraux.

2. Procédé selon la revendication 1, **caractérisé en ce que** la surface de collage est comprise entre 60 et 80 %, tandis que la température est comprise entre 18° et 24° C.

3. Procédé selon la revendication 2, **caractérisé en ce que** la surface de collage est égale à environ 70 %, tandis que la température est d'environ 20° C et le taux d'hygrométrie d'environ 55 %.

4. Procédé selon la revendication 1, **caractérisé en ce qu'**il comporte une étape consistant à mouiller la surface inférieure du module à l'alcool, préalablement à son insertion dans la cavité ou à son contact avec la colle.

5. Procédé selon la revendication 1, **caractérisé en ce qu'**il comporte une étape consistant à déposer une colle sous forme d'au moins un point central de poids compris entre 0,002 et 0,004 gramme, chaque point latéral ayant un poids compris entre 0,0005 et 0,0015 gramme, par exemple le poids de la goutte centrale et de chaque goutte latérale sont respectivement égaux à environ 0,003 et 0,001 gramme.

6. Procédé selon la revendication 1, **caractérisé en ce qu'**on dépose les quatre points latéraux de colle après le dépôt du point central, et juste avant l'insertion du module.

7. Procédé selon l'une des revendications 1 à 6, **caractérisé en ce que** l'on exerce le pressage par l'intermédiaire d'un blanchet comportant un trou central, que l'on dispose entre le module et des moyens presseurs.

8. Procédé selon la revendication 1, **caractérisé en ce que** l'insertion du module dans la cavité est effectuée en un laps de temps compris entre 300 et 600 ms.

9. Procédé selon l'une des revendications 1 à 5, **caractérisé en ce que** la colle cyanoacrylate possède un temps d'ouverture compris entre 30 et 60 secondes.

## Patentansprüche

1. Realisierungsverfahren von Karten mit elektronischem Modul, bestehend in der Lieferung eines mit einer Aussparung, einem elektronischen Modul mit der Aussparung entsprechenden Abmessungen, einem Cyancrylat-Klebstoff versehenen Kartenkörper und mit Schritten, nach denen man diesen Klebstoff in die Aussparung einbringt, man das Modul in dieser Aussparung in einer deutlich zentrierten Position einfügt und man den Klebstoff gegen den Kartenkörper und das Modul presst; wobei der Klebstoff in Tropfen an zentralen Punkten und an wenigstens vier lateralen Punkten aufgebracht wird; **dadurch gekennzeichnet, dass**:
• eine aufgebrachte Klebstoffmenge nur eine Leimung einer Fläche von wenigstens 50% der Aussparung nach dem Pressen ermöglicht;
• das Aufbringen des Klebstoffs unter Umgebungsbedingungen bei einer Temperatur von 15° bis 30°C und bei einer relativen Feuchtigkeit von 50 bis 75% erfolgt; und
• der Tropfen am zentralen Punkt größer ist als die Tropfen an den lateralen Punkten.

2. Verfahren gemäß Anspruch 1, **dadurch gekennzeichnet; dass** die Klebefläche zwischen 60 und 80% inbegriffen ist, während die Temperatur zwischen 18° und 24°C inbegriffen ist.

3. Verfahren gemäß Anspruch 2, **dadurch gekennzeichnet, dass** die Klebefläche ungefähr gleich 70% ist, während die Temperatur ungefähr 20°C und die Luftfeuchtigkeit ungefähr 55% ist.

4. Verfahren gemäß Anspruch 1, **dadurch gekennzeichnet, dass** es einen Schritt beinhaltet, bestehend in der Befeuchtung der Unterseite des Moduls mit Alkohol vor seinem Einfügen in die Aussparung oder seinem Kontakt mit dem Klebstoff.

5. Verfahren gemäß Anspruch 1, **dadurch gekennzeichnet, dass** es einen Schritt beinhaltet, bestehend im Aufbringen eines Klebstoffs in Form wenigstens eines zentralen Punktes mit einem zwischen 0,002 und 0,004 Gramm inbegriffenen Gewicht, wobei jeder laterale Punkt ein zwischen 0,0005 und 0,0015 Gramm inbegriffenen Gewicht hat, zum Beispiel sind das Gewicht des zentralen Tropfens und jedes lateralen Tropfens jeweils ungefähr gleich 0,003 und 0,001 Gramm.

6. Verfahren gemäß Anspruch 1, **dadurch gekennzeichnet**, das man die vier lateralen Klebstoffpunkte nach dem Aufbringen des zentralen Punktes und direkt vor dem Einfügen des Moduls aufbringt.

7. Verfahren gemäß Anspruch 1 bis 6, **dadurch gekennzeichnet, dass** man das Pressen mittels eines ein zentrales Loch beinhaltendes Drucktuchs ausübt, das man zwischen dem Modul und den Pressmitteln anbringt.

8. Verfahren gemäß Anspruch 1, **dadurch gekennzeichnet, dass** das Einfügen des Moduls in der Aussparung in einer zwischen 300 und 600 ms inbegriffenen Zeitspanne durchgeführt wird.

9. Verfahren gemäß Anspruch 1 bis 5, **dadurch gekennzeichnet, dass** der Cyancrylat-Klebstoff eine zwischen 30 und 60 Sekunden inbegriffene Öffnungszeit hat.

## Claims

1. A method for producing electronic module cards consisting in supplying a card body provided with a cavity, an electronic module with dimensions corresponding to the cavity, and a cyanoacrylate adhesive, and comprising steps according to which this adhesive is deposited in the cavity, the module is inserted in this cavity in a substantially centred position and the adhesive is pressed between the card body and the module; the adhesive being deposited in drops at a central point and at least four lateral points; **characterised in that**:
□ a quantity of adhesive deposited allows solely a gluing of an area of at least 50% of the cavity after pressing;
□ the deposition of the glue being effected under ambient conditions at a temperature of 15° to 30°C and a relative humidity of 50 to 75%; and
□ the drop at the central point is larger than the drops at the lateral points.

2. A method according to Claim 1, **characterised in that** the gluing surface is between 60 and 80%, whilst the temperature is between 18° and 24°C.

3. A method according to Claim 2, **characterised in that** the gluing surface is approximately 70%, whilst the temperature is approximately 20°C and the relative humidity approximately 55%.

4. A method according to Claim 1, **characterised in that** it includes a step consisting in wetting the bottom surface of the module with alcohol, prior to its insertion in the cavity or its contact with the adhesive.

5. A method according to Claim 1, **characterised in that** it includes a step consisting in depositing an adhesive in the form of at least one central dot with a weight of between 0.002 and 0.004 grams, each lateral dot having a weight of between 0.0005 and 0.0015 grams, for example the weight of the central drop and of each lateral drop being respectively approximately 0.003 and 0.001 grams.

6. A method according to Claim 1, **characterised in that** the four lateral dots of glue are deposited after the deposition of the central dot, and just before the insertion of the module.

7. A method according to one of Claims 1 to 6, **characterised in that** the pressing is exerted by means of a blanket having a central hole, which is disposed between the module and the pressing means.

8. A method according to Claim 1, **characterised in that** the insertion of the module in the cavity is carried out in a period of time of between 300 and 600 ms.

9. A method according to one of Claims 1 to 5, **characterised in that** the cyanoacrylate glue has a setting time of between 30 and 60 seconds.
